# EUROPÄISCHE PATENTSCHRIFT

(11) **EP 2 786 884 B1**
(45) Veröffentlichungstag und Bekanntmachung des Hinweises auf die Patenterteilung: **19.08.2020**
(21) Anmeldenummer: 14000880.6
(22) Anmeldetag: 12.03.2014
(51) Int. Cl.: B60J 7/16, B60R 21/13, B62D 33/06, B66F 9/075

(54) **Kabinenloses Fahrzeug, insbesondere Baufahrzeug, mit Überrollbügel**
Cabinless vehicle, in particular construction vehicle, with rollover bar
Véhicule sans cabine, notamment véhicule de chantier, avec arceau de sécurité

(30) Priorität: 04.04.2013 DE 102013005832
(43) Veröffentlichungstag der Anmeldung: 08.10.2014
(73) Patentinhaber: BOMAG GmbH, 56154 Boppard (DE)
(72) Erfinder: Bender, Matthias, 55497 Ellern (DE); Stein, Diana, 56626 Andernach (DE); Anheier, Thorsten, 56330 Kobern-Gondorf (DE); Liesenfeld, Klaus, 55494 Mörschbach (DE)
(74) Vertreter: Heidler, Philipp

(56) Entgegenhaltungen:
- EP-A1- 1 580 082
- EP-A1- 2 148 013
- EP-A1- 2 399 860
- AT-U1- 5 756
- DE-A1- 4 415 246
- JP-A- S52 131 317
- US-A- 3 336 074
- US-A- 3 762 761

## Beschreibung

Die Erfindung betrifft ein kabinenloses Baufahrzeug mit einem Uberrollbügel, wobei der Überrollbügel ein Vertikalträgerpaar umfasst, das in einem rückwärtigen Bereich eines Fahrstands des Fahrzeugs angeordnet ist. Jeder Vertikalträger des Überrollbügels weist jeweils einen Seitenholm und einen Schwenkholm auf, die über erste Gelenkverbindungen miteinander verbunden sind. Das Seitenholmpaar und das Schwenkholmpaar sind zwischen einer Schutzposition und einer Transportposition des Überrollbügels verstellbar.

Eine derartiges kabinenloses Baufahrzeug mit schwenkbarem Überrollbügel ist aus der Druckschrift DE 10 2004 014 475 A1 bekannt, die hiermit vollumfänglich in Bezug genommen wird. Überrollbügel oder auch ROPS (*roll over protective structure*) dienen dem Überrollschutz und sind insbesondere bei kabinenlosen Baufahrzeugen häufig als an einen Maschinenrahmen angebrachte Bügel ausgebildet. Solche Überrollbügel sind häufig in einem rückwärtigen Bereich eines Fahrstands des Fahrzeugs angeordnet, um die Sichtbeeinträchtigung für den Fahrer möglichst gering zu halten. Die Verbindung erfolgt indirekt oder insbesondere direkt üblicherweise an den Maschinenrahmen der Fahrzeuge, um die erforderliche Stabilität zu erreichen. Typische Fahrzeuge, die derartige Überrollbügel aufweisen, sind beispielsweise insbesondere sogenannte Tandemwalzen in Aufsitzausführung, auf die sich die Erfindung insbesondere bezieht. Ferner sind andere kabinenlose Spezialfahrzeuge mit verstellbaren Dachaufbauten bekannt. Beispielsweise betrifft die EP 2 399 860 A1 einen Hoflader mit einer faltbaren Dacheinrichtung an einem Überrollbügel. Auch die JP S52 131317 A offenbart einen Traktor mit einem faltbaren Dach. Aus der US 3,336,074 A und der US 3,762,761 A sind Gabelstapler bekannt, die ein faltbares Fallschutzgitter aufweisen, welches den Fahrer vor herabfallenden Gegenständen schützen soll.

Um die Transporthöhe dieser Baufahrzeuge zu verringern, können die Vertikalträger des Überrollbügels zusammenklappbar ausgebildet sein, wobei die aufgestellte Position des Überrollbügels nachstehend als Schutzposition und die herabgeschwenkte Position des Überrollbügels als Transportposition bezeichnet werden. Bei dieser Ausführung eines Überrollbügels umfasst dieser somit zwei aufragende Vertikalträger, die jeweils einen fest mit einem Maschinenrahmen des Baufahrzeugs verbundenen Seitenholm und einen bewegbar an diesem gelagerten Schwenkholm umfassen, die über eine Gelenkverbindung schwenkgelenkig miteinander verbunden sind. Ferner sind die beiden Schwenkholme zum Erhalt der Bügelstruktur an ihrem anderen Ende vorzugsweise mit einem Querholm miteinander verbunden. Der aus der DE 10 2004 014 475 A1 bekannte schwenkbare Überrollbügel weist zwischen dem Seitenholm und dem Schwenkholm jeweils eine erste Gelenkverbindung auf, die in der konkreten Ausführungsform eine Arretierung und einen Anschlag besitzt. Der Anschlag besteht aus einer Gelenkversteifung, die aus einer Verlängerung des Seitenholmpaares gebildet wird und das Ende des Schwenkholmpaares teilweise umgreift. Zusätzlich weist die Arretierung ein stufenlos verstellbares Stellglied auf, mit welchem die Gelenkversteifung gegen das Schwenkholmpaar verspannbar ist, wodurch die Schwenkholme in der aufgestellten Schutzposition an den Seitenholmen in der Schutzposition des Überrollbügels festgestellt werden können.

Ein derartiger schwenkbarer Überrollbügel hat den Vorteil, dass er einen kompakten Aufbau des Baufahrzeugs ermöglicht, da der hoch aufragenden Überrollbügel aus seiner Schutzposition in eine Transportposition weggeschwenkt werden kann und somit raumsparend von einer Baustelle zur nächsten Baustelle transportiert werden kann, da der hoch aufragende Überrollbügel in seiner Transportposition den Fahrstand des Baufahrzeugs nicht mehr oder zumindest nicht mehr in dem ursprünglichen Ausmaß überragt.

Wenn auch der Überrollbügel sowohl in seiner schwenkbaren Ausgestaltung als auch in seiner konventionellen Ausgestaltung den Fahrer des Baufahrzeugs bei einem Umkippen oder Rollen des Baufahrzeugs um die eigene Längsachse schützt, so ist dennoch der Fahrer bei derartigen kabinenlosen Baufahrzeugen sowohl einem intensiven Sonnenschein als auch Regen und Wind ausgesetzt. Die Aufgabe der Erfindung ist es daher, speziell für kabinenlose Baufahrzeuge, mit schwenkbarem Überrollbügel auf möglichst effiziente Weise einen Wetterschutz zu schaffen, der zuverlässig betätigbar und gleichzeitig im Hinblick auf den Transport des Baufahrzeugs nicht störend ausgebildet sein soll. Der Wetterschutz soll dabei insbesondere in der Weise ausgebildet sein, dass er in der Wetterschutzposition den auf dem Baufahrzeug im Fahrstand befindlichen Fahrer vor Sonneneinstrahlung und Regen schützt.

Die Lösung der Aufgabe gelingt mit einem Baufahrzeug gemäß dem unabhängigen Anspruch 1. Bevorzugte Weiterbildungen sind in den abhängigen Ansprüchen angegeben.

Ein wesentlicher Aspekt der Erfindung liegt nun darin, dass erfindungsgemäß eine Dachabdeckung als Teil einer Wetterschutzeinrichtung vorgesehen ist, die verstellbar am Überrollbügel gelagert ist und auf diese Weise mit dem Überrollbügel zwischen einer Wetterschutzposition und einer Transportposition bewegbar ist. In der Wetterschutzposition ist die Dachabdeckung in einer Position am in Schutzposition befindlichen Überrollbügel, in der sie den Fahrstand des Baufahrzeugs wenigstens in Vertikalrichtung nach oben zumindest teilweise abdeckt, um auf diese Weise beispielsweise einen Sonnenschutz und/oder Regenschutz eines im Fahrstand befindlichen Fahrers zu ermöglichen. In der Lagerungsposition ist die Wetterschutzeinrichtung und insbesondere die Dachabdeckung dagegen in einer Position, in der sie an dem Baufahrzeug bei in Transportposition befindlichem Überrollbügel möglichst wenig Platz wegnimmt und idealerweise gleichzeitig eine Nutzung des Fahrstandes, beispielsweise zu Rangierzwecken, ermöglicht. Wesentlich ist somit, dass erfindungsgemäß kein An- und Abbau der Wetterschutzeinrichtung am Überrollbügel zwischen Arbeitseinsätzen und Transportphasen vorgesehen ist, sondern vielmehr eine Relativverstellung zusammen mit wenigstens einem Teil des Überrollbügels, insbesondere den Schwenkholmen. Erfindungsgemäß ist es zusammenfassend somit vorgesehen, dass wenigstens die Dachabdeckung der Wetterschutzeinrichtung am Überrollbügel in der Weise gelagert ist, dass sie zwischen einer aufgespannten Wetterschutzposition bei in Schutzposition befindlichem Überrollbügel und einer Lagerungsposition bei in Transportposition befindlichem Überrollbügel zusammen mit dem Überrollbügel verstellbar ist. Dabei ist die Dachabdeckung durch Freigeben einer ersten Arretierung eines Stellgliedes der ersten Gelenkverbindungen in eine heckseitige Position unterhalb des Fahrstandes verstellbar. Ebenso ist die Dachabdeckung in ihrer Lagerungsposition in einer Winkelstellung nahezu parallel zu dem Schwenkholmpaar arretierbar. Ein Vorteil dieses kabinenlosen Baufahrzeugs ist es, dass es bei hochgeschwenktem Überrollbügel sowohl eine Schutzposition als auch eine Wetterschutzposition, bei der eine Dachabdeckung über den Fahrstand des Baufahrzeugs aufgespannt ist, bereitstellt. In der kompakten Lagerungsposition der Wetterschutzeinrichtung ist das Baufahrzeug von einer Baustelle zur nächsten Baustelle einfach und raumsparend transportierbar und beispielsweise in einem Baumaschinendepot platzsparend unterstellbar. Der manuelle Aufwand beim Verstellen der Wetterschutzeinrichtung von einer Lagerungsposition in eine Wetterschutzposition beziehungsweise beim Verstellen von einer Wetterschutzposition in eine Lagerungsposition kann darüber hinaus durch eine nachstehend noch weiter erläuterte teilweise automatische Verstellbarkeit weiter vermindert werden. Gleichzeitig genießt der Fahrer nun einen erhöhten Schutz gegen Witterungseinflüsse.

Die zentrale Aufgabe der Dachabdeckung liegt darin, in der Wetterschutzposition den Fahrer in Vertikalrichtung nach oben vor Sonnenstrahlen und/oder Regen zu schützen. Dazu ist die Dachabdeckung idealerweise aus einem formstabilen, wasserdichten und lichtundurchlässigen Material vollflächig ausgebildet. Auf diese Weise ist ein effektiver Sonnen- und/oder Regenschutz über die Fläche der Dachabdeckung hinweg gewährleistet. Weiter bevorzugt ist die Dachabdeckung wannenartig ausgebildet, wobei sich an eine im wesentlichen flache Grundfläche an den Seitenrändern in der Wetterschutzposition an diese Grundfläche in Vertikalrichtung nach unten gerichtete Seitenwände anschließen, die beispielsweise eine gerichtete Regenwasserableitung ermöglichen. Die Seitenränder der Dachabdeckung sind somit in der Wetterschutzposition nach unten umgebogen ausgebildet. Diese Anordnung ist beispielsweise auch insofern von Vorteil, als dass innerhalb des Wanneninnenraums Tragelemente und/oder Arretiereinrichtungen, insbesondere in der nachstehend noch näher beschriebenen Weise, angeordnet werden können und durch die Seitenwände in die Grundfläche nach außen zu den Seiten und nach oben hin geschützt werden.

Hinsichtlich der konkreten Ausbildung und Anbringung der Wetterschutzeinrichtung an dem Überrollbügel kann zur Umsetzung des erfindungsgemäßen Grundgedankens auf eine Vielzahl verschiedener Alternativen zurückgegriffen werden. So kann die Dachabdeckung beispielsweise direkt über eine Gelenkverbindung an den Schwenkholmen oder insbesondere an einem Querholm angeordnet sein. In einer konkreten Umsetzung hat es sich dabei allerdings als vorteilhaft erwiesen, wenn die Dachabdeckung der Wetterschutzeinrichtung nicht direkt über eine Gelenkverbindung an Teilen des Überrollbügels angeordnet ist, sondern vielmehr eine Verbindungseinrichtung zwischen dem Überrollbügel und der Dachabdeckung als Teil der Wetterschutzeinrichtung vorhanden ist, die einerseits eine stabile und sichere Abstützung und/oder Befestigung der Dachabdeckung an dem Baufahrzeug ermöglicht und andererseits gleichzeitig insbesondere weder die Schutzfunktion noch die Faltfunktion des schwenkbaren Überrollbügels behindert. Diese Verbindungseinrichtung umfasst beispielsweise vorzugsweise Befestigungsarme, bei denen es sich insbesondere um eine Art Anbindungslaschen handeln kann, die insbesondere an den Schwenkholmen fest fixierbar sind. Um nun eine Relativbeweglichkeit der Dachabdeckung gegenüber den Schwenkholmen zu ermöglichen, umfasst die Verbindungseinrichtung der Wetterschutzeinrichtung ferner bevorzugt Dachholme, die schwenkbar, direkt oder indirekt an den Befestigungsarmen angeordnet sind. Dazu ist beispielsweise eine zweite Gelenkverbindung vorgesehen, die insgesamt in der Weise ausgebildet ist, dass eine Schwenkverstellung der Dachholme gegenüber den Befestigungsarmen und damit gegenüber den Schwenkholmen des Überrollbügels möglich ist. Die Dachholme dienen ferner der mittelbaren oder unmittelbaren Lagerung der Dachabdeckung der Wetterschutzeinrichtung. Vorzugsweise ist es somit vorgesehen, dass an dem über die erste Gelenkverbindung mit dem Seitenholmpaar verbundenen Schwenkholmpaar wenigstens ein und insbesondere zwei Befestigungsarme als Teil einer Stützvorrichtung der Wetterschutzeinrichtung angeordnet sind. Diese Ausführungsform der Erfindung hat den Vorteil, dass an dem Überrollbügel lediglich eine weitere Gelenkverbindung anzubauen ist, die ein Dachholmpaar verstellbar mit dem Überrollbügel verbindet, so dass das Dachholmpaar, welches die Dachabdeckung trägt, mittels der weiteren Gelenkverbindung in eine Lagerungsposition verschwenkbar ist.

Um die erforderliche Tragstabilität der Dachholme zu erhalten, ist es bevorzugt, wenn zwischen den beiden Dachholmen ferner wenigstens ein Querholm vorhanden ist, der beide Dachholme miteinander verbindet. Durch Querholme kann auf diese Weise insgesamt ein Dachrahmen als wesentliche Tragstruktur für die Dachabdeckung erhalten werden. Eine derartige Konstruktion hat den Vorteil, dass eine Dachabdeckung beispielsweise aus einer Kunststoffschale an den Dachholmen der Wetterschutzeinrichtung problemlos montierbar ist. Darüber hinaus ist es auch möglich, eine textile Dachabdeckung über das Dachholmpaar mit dem mindestens einen Querholm zu spannen und zu fixieren.

Um die Dachabdeckung in ihrer aufgespannten Wetterschutzposition zu sichern, ist vorzugsweise eine Arretiervorrichtung vorhanden, die zur Feststellung der in aufgespannter Wetterschutzposition befindlichen Dachabdeckung an dem Überrollbügel oder insbesondere an den Befestigungsarmen ausgebildet ist. Letztere Ausführungsform hat den Vorteil, dass im Falle einer Nachrüstung keine diesbezüglichen Modifikationen am Überrollbügel erforderlich sind. Die, insbesondere manuell betätigbare, Arretiereinrichtung ist dabei in der Weise ausgebildet, dass im arretierten Zustand keine Verstellung der Dachabdeckung beziehungsweise der Querholme relativ zu den Schwenkholmen möglich ist. Dabei kann auf eine Vielzahl verschiedener Ausbildungen der Arretiervorrichtung zurückgegriffen werden. Als besonders geeignet hat sich dabei eine Arretiervorrichtung erwiesen, bei der am oberen Enden der Befestigungsarme zur Dachabdeckung hin Arretierbügel als Teil eines Spannverschlusses angeordnet sind, die in der aufgespannten Wetterschutzposition der Dachabdeckung mit Rasthaken der Dachholme in Eingriff stehen und die zweiten Gelenkverbindungen in der Wetterschutzposition arretieren. Dazu kann der Arretierbügel mithilfe eines Spannhebels in die entsprechenden Rasthaken der Dachholme eingeführt und gespannt werden, um die Befestigungsarme und die Dachholme in der aufgespannten Wetterschutzposition miteinander arretierend zu verbinden. Durch Lockern des Spannhebels kann der Arretierbügel von den Rasthaken freigegeben werden und die Dachabdeckung aus der Wetterschutzposition, bei der die Dachabdeckung nahezu rechtwinklig zu den Befestigungsarmen des Stützarmpaares angeordnet ist, in unterschiedliche Winkelpositionen zwischen Befestigungsarmen und Dachholmen bzw. zwischen Stützarmpaar und Dachabdeckung verstellt werden. Besonders bevorzugt ist es dabei, wenn die Elemente der Arretiervorrichtung in Bezug auf die Dachabdeckung, insbesondere bei wannenartiger Ausbildung der Dachabdeckung, innenliegend auf der zur Fahrstand gerichteten Seite angeordnet sind. Dadurch sind sie im arretierenden Zustand nach außen abgedeckt.

Für das Verstellen der ersten und zweiten Gelenkverbindungen sind vorzugsweise jeweils Schwenkgelenke vorhanden, wobei die Schwenkgelenkachsen vorzugsweise im Wesentlichen rechtwinklig zu den jeweiligen Holmen der Seitenholmpaare, der Schwenkholmpaare und der Dachholmpaare ausgerichtet sind. Somit ist in vorteilhafter Weise ein Verstellen dieser drei miteinander zusammenwirkenden Holmpaare um jeweils horizontale Achsen und ein ziehharmonikaartiges Zusammenfalten der Wetterschutzeinrichtung beim Verstellen des schwenkbaren Überrollbügels in eine Transportposition zu einer kompakten Lagerungsposition der Wettereinrichtung möglich, wodurch eine für den Transport des Baufahrzeugs besonders platzsparende Gesamtkonstruktion der Gesamtheit aus Überrollbügel und Wetterschutzeinrichtung erhalten wird. Der Begriff Gelenkverbindung bezeichnet im Rahmen der Offenbarung der Erfindung somit eine funktionale Einheit, die auch mehrere einzelne Gelenke umfassen kann. So weist die erste Gelenkverbindung zwischen den Schwenkholmen und den Seitenholmen beispielsweise bevorzugt zwei Einzelgelenke in im Stand der Technik bekannter Weise auf.

Für die konkrete Ausbildung des schwenkbaren Überrollbügels kann grundsätzlich auf das gesamte Spektrum des Standes der Technik zurückgegriffen werden. Ideal ist es beispielsweise, wenn die erste Gelenkverbindung zwischen dem Seitenholmpaar und dem Schwenkholmpaar Anschlagflächen aufweist, an welchen das Schwenkholmpaar des Überrollbügels in seiner aufgeschwenkten Schutzposition an den Seitenholmen arretiert. Für den Überrollbügel ist es somit vorzugsweise vorgesehen, dass er in einer Weise ausgebildet ist, in der er zwischen seinen beiden Endstellungen Schutzposition und Transportposition verschwenkbar ist. Für die Verschwenkbarkeit der Dachabdeckung ist es grundsätzlich auch möglich, dass diese zwischen zwei Endpositionen verschwenkbar ist. Es hat sich im praktischen Einsatz nun allerdings als bevorzugt herausgestellt, wenn für die Dachabdeckung zusätzlich wenigstens eine definierte Zwischenposition zur Schwenkverstellung möglich ist. Die Wetterschutzeinrichtung ist mit anderen Worten bevorzugt in der Weise ausgebildet, dass die Dachabdeckung in mehreren vorgegebenen Winkelstellungen zu dem Schwenkholmpaar arretierbar ist. Dies hat den Vorteil, dass beim Umschwenken der Dachabdeckung mehrere vorgegebene Winkelstellungen für die Dachabdeckung mithilfe der vorgegebenen Winkelstellungen des Schwenkholmpaares in optimaler Weise möglich sind. Damit kann die relativ großflächige Dachabdeckung der Wetterschutzeinrichtung unter Berücksichtigung des Aufbaus des Fahrstands des Baufahrzeugs über insbesondere eine arretierbare spitzwinklige Zwischenposition der zweiten Gelenkverbindung bequem in eine Lagerungsposition unterhalb und hinter den Fahrstand des Baufahrzeugs verbracht werden oder in die Wetterschutzposition ausgeschwenkt werden. Diese Zwischenposition kann beispielsweise dann vorgesehen sein, wenn die Dachabdeckung aus ihrer Wetterschutzposition zunächst nur teilweise abgekippt wird, um beispielsweise durch den Fahrstand vorgegebene Schwenkhindernisse, wie beispielsweise eine Rückenlehne eines Fahrersitzes, zu umgehen.

Während die Dachabdeckung in ihrer Wetterschutzposition, insbesondere mit ihrem Dachholmpaar, in einer ersten Winkelstellung vorzugsweise nahezu rechtwinklig zu dem Schwenkholmpaar mithilfe des oben erwähnten Arretierbügels in Eingriff mit Rasthaken arretierbar ist, kann nach Freigabe des Eingriffs zwischen Arretierbügel und Rasthaken die Dachabdeckung, insbesondere mit ihrem Dachholmpaar, in einer zweiten Winkelstellung, der Zwischenstellung, spitzwinklig zu dem Schwenkholmpaar, beispielsweise mithilfe einer weiteren Rasteinrichtung, die wenigstens teilweise an der Dachabdeckung oder den Dachholmen angeordnet sind, arretiert werden. Schließlich ist es möglich, die Dachabdeckung in ihrer Lagerungsposition mit ihrem Dachholmpaar in einer dritten Winkelstellung nahezu parallel zu dem Schwenkholmpaar in der Lagerungsposition der Wetterschutzeinrichtung zu arretieren. Die Winkelangaben beziehen sich dabei auf die Lagewinkel der Längserstreckungsachsen der Dachabdeckung, insbesondere ihrer Dachholme, und der Schwenkholme in einer Ebene senkrecht zur Schwenkachse der zweiten Gelenkverbindung.

Zur Verrastung der Dachabdeckung in einer oder mehrerer Stellpositionen, insbesondere gegenüber den Befestigungsarmen und/oder den Schwenkholmen, ist es bevorzugt vorgesehen, wenn die Rasteinrichtung wenigstens eine Rastscheibe, idealerweise mit mehrere Rastpositionen, und wenigstens einen zum Eingriff in diese Rastscheibe entsprechend verstellbaren Rasthebel umfassen, wobei die Rastscheibe bevorzugt am Dachholm und der Rasthebel bevorzugt am Befestigungsarm oder Schwenkholm angeordnet ist. Die Rastscheiben stehen bei in Wetterschutzposition befindlicher Dachabdeckung idealerweise zum Fahrstand vor. In diese Rastpositionen der Rastscheibe kann eine Rastnase des Rasthebels zur Arretierung eingreifen. In jeder der Rastpositionen ist die Dachabdeckung insbesondere mit dem Dachholmpaar gegenüber dem Befestigungsarm und somit gegenüber dem Schwenkholm in vorbestimmten Winkelstellungen in vorteilhafter Weise arretierbar. Auf diese Weise ist eine Arretierung der Dachabdeckung gegenüber den Schwenkholmen mit einer einzigen Rasteinrichtung in mehr als einer definierten Rastposition möglich. Von der Erfindung mit umfasst sind auch solche Ausbildungen, bei denen auf den beiden Seiten der Schwenkholme jeweils eine solche Rasteinrichtung vorgesehen ist.

Um einen sicheren Transport und eine zuverlässige Positionierung der Dachabdeckung in ihrer Lagerungsposition zu ermöglichen, ist bevorzugt eine Sicherungseinrichtung vorgesehen, über die eine Feststellung der Dachabdeckung in dieser Position an dem Baufahrzeug möglich ist. Damit wird in vorteilhafter Weise die Wetterschutzeinrichtung in ihrer Lagerungsposition vor einem plötzlichen und unerwarteten Ausschwenken der Dachabdeckung zusätzlich gesichert. Dies gelingt auf besonders elegante und damit bevorzugte Weise, wenn zur weiteren Sicherung der Lagerungsposition der Wetterschutzeinrichtung in dem rückwärtigen Bereich des Fahrstands, insbesondere unterhalb des Fahrstands des Baufahrzeugs, ein Sicherungshaken angeordnet ist, in den eine Sicherungsnase des vorstehend bereits beschriebenen Rasthebels zur Feststellung eingreift. Damit erfüllt der Rasthebel eine Doppelfunktion, so dass eine besonders effiziente Bauelementnutzung gelingt.

Bevorzugt ist es vorgesehen, dass zwischen wenigstens einem Seitenholm und wenigstens einem Schwenkholm wenigstens eine Antriebseinrichtung, insbesondere eine Gasdruckfeder, angeordnet ist, welche im Bereich der ersten Gelenkverbindungen schwenkgelenkübergreifend angeordnet ist. Durch das Anordnen von Gasdruckfedern zwischen dem Seitenholmpaar und dem Schwenkholmpaar wird die Verstellbarkeit des Schwenkholmpaares gegenüber dem Seitenholmpaar für den Benutzer unterstützt und erleichtert. Die Handhabung beziehungsweise das Verstellen der Wetterschutzeinrichtung zusammen mit dem Schwenkbügel in die Lagerungsposition oder in die Wetterschutzposition wird mit dieser wenigstens einen ersten Gasdruckfeder deutlich verbessert.

Selbstverständlich ist es auch möglich, ergänzend oder alternativ zur Schwenkverstellung der Dachabdeckung der Wetterschutzeinrichtung eine Kraftunterstützung durch eine Antriebseinrichtung, insbesondere eine Gasdruckfeder, vorzusehen. Vorzugsweise weist das Baufahrzeug daher insbesondere im Bereich der zweiten Gelenkverbindungen schwenkgelenkübergreifend wenigstens eine Gasdruckfeder auf, die in vorteilhafter Weise das Aufspannen und das Zusammenklappen der Dachabdeckung bzw. der Wetterschutzeinrichtung deutlich erleichtert. Die Gasdruckfeder ist dazu beispielsweise zwischen einem Dachholm oder einer Rastscheibe und dem Befestigungsarm oder dem Schwenkholm angeordnet.

Grundsätzlich sind die verwendeten Antriebseinrichtungen, insbesondere Gasdruckfedern, in der Weise angeordnet, dass ihre Stellkraft von der Transportposition des Überrollbügels und der Lagerungsposition der Wetterschutzeinrichtung, dass heißt insgesamt somit von dem zusammengefalteten Zustand, in Richtung des ausgefalteten Zustands bei in Schutzposition befindlichem Überrollbügel und in Wetterschutzposition befindlicher Wetterschutzeinrichtung wirken. Dadurch wird insbesondere auch verhindert, dass sich diese Gesamtheit ungewollt und unerwartet zusammenfaltet.

Häufig ist ein über eine reine Dachabdeckung hinausgehender Wetterschutz gewünscht. Erfindungsgemäß ist es dazu vorgesehen, dass eine Heckabdeckung vorgesehen ist, die idealerweise lösbar an der in der Wetterschutzposition befindlichen Dachabdeckung befestigbar ist. Dabei kann es sich beispielsweise um eine Plane oder Ähnliches handeln. Um die Sicht des Fahrers nach hinten möglichst wenig zu beinträchtigen, ist in der Heckabdeckung vorzugsweise ein Sichtbereich aus transparentem Material vorhanden.

Zusätzlich zu der Heckabdeckung ist es weiterhin möglich, in der Wetterschutzposition der Dachabdeckung auch, insbesondere lösbare, Seitenabdeckungen anzubringen, wobei die Seitenabdeckungen vorzugsweise unterhalb des Fahrstands an Seitenteilen des Baufahrzeugs lösbar fixiert sind und in den Seitenabdeckungen Sichtbereiche aus transparentem Material angeordnet sind. Um die Seitensicht weiterhin zu verbessern, kann es vorgesehen sein, dass die Seitenabdeckungen unterhalb des Fahrstands an Seitenteilen des Baufahrzeugs umschlagbar sind und in dem umgeschlagenen Zustand lösbar fixiert sind. Damit können die Seitenabdeckungen nahezu halbiert werden und dennoch einen begrenzten seitlichen Wetterschutz bieten, während der Fahrer des Baufahrzeugs ein freies Blickfeld zu dem Fahrbahnboden erhält.

Die Wetterschutzeinrichtung kann grundsätzlich als fest mit dem Überrollbügel verbundene Einheit ausgebildet werden. Idealerweise ist die Wetterschutzeinrichtung allerdings als Austauscheinheit beziehungsweise als funktional eigenständiges Modul ausgebildet, um beispielsweise eine Nachrüstung bestehender Baufahrzeuge mit Überrollbügel aber ohne Wetterschutz zu ermöglichen. Auch unter Berücksichtigung dieses Aspektes ist es besonders bevorzugt, wenn die konkrete Anbindung der Wetterschutzeinrichtung an den Überrollbügel über Befestigungsarme erfolgt. Diese sind dazu insbesondere in der Weise ausgebildet, dass sie zur Anlage an den Außenseiten der Seitenholme ausgebildet sind und auf diese Weise besonders einfach, beispielsweise über geeignete Schraub- und oder Klammerverbindungen an den Seitenholmen fixiert werden können.

Nachfolgend wird die Erfindung anhand eines ausführenden Beispiels beschrieben, das mit Bezugnahme auf die Abbildungen näher erläutert wird.
- Fig. 1: zeigt eine schematische Seitenansicht eines kabinenlosen Baufahrzeugs mit aufgespannter Wetterschutzeinrichtung in Wetterschutzposition gemäß einer Ausführungsform der Erfindung;
- Fig. 2: zeigt eine schematische Seitenansicht der Wetterschutzeinrichtung mit Überrollbügel gemäß Fig. 1 ohne Dachabdeckung;
- Fig. 3: zeigt eine schematische perspektivische Ansicht der Wetterschutzeinrichtung ohne Dachabdeckung gemäß Fig. 2;
- Fig. 4: zeigt eine schematische perspektivische Teilansicht mit einer Rastvorrichtung zur Arretierung der Dachabdeckung der Wetterschutzeinrichtung in der Wetterschutzposition gemäß Fig. 1 ohne Dachabdeckung;
- Fig. 5: zeigt eine schematische Seitenansicht des Baufahrzeugs der Fig. 1 in einer ersten arretierbaren spitzwinkligen Position der Dachabdeckung an der Stützvorrichtung;
- Fig. 6: zeigt eine schematische Seitenansicht der Wetterschutzeinrichtung mit Überrollbügel mit arretierter Position gemäß Fig. 5 ohne Dachabdeckung;
- Fig. 7: zeigt eine schematische Seitenansicht des Baufahrzeugs gemäß Fig. 1 mit umgeklappter Wetterschutzeinrichtung bei spitzwinklig arretierter Position der Dachabdeckung gemäß Fig. 5;
- Fig. 8: zeigt eine schematische Seitenansicht der umgeklappten Wetterschutzeinrichtung mit Überrollbügel gemäß Fig. 7 ohne Dachabdeckung;
- Fig. 9: zeigt eine schematische Seitenansicht des Baufahrzeugs gemäß Fig. 1 mit der Wetterschutzeinrichtung in zusammengefalteter Lagerungsposition;
- Fig. 10: zeigt eine schematische Seitenansicht der Wetterschutzeinrichtung mit Überrollbügel gemäß Fig. 9 in der Lagerungsposition ohne Dachabdeckung;
- Fig. 11: zeigt eine schematische perspektivische Ansicht eines Fahrstands des Baufahrzeugs gemäß Fig. 1 mit aufgespannter Wetterschutzeinrichtung in Wetterschutzposition mit rückseitig angebrachter Heckabdeckung;
- Fig. 12: zeigt eine schematische perspektivische Ansicht eines Führungsbereichs des Baufahrzeugs gemäß Fig. 11 mit zusätzlich seitlich angebrachter Seitenabdeckung;
- Fig. 13: zeigt eine schematische perspektivische Ansicht des Fahrstands des Baufahrzeugs gemäß Fig. 12 mit teilweise zurückgeschlagener Seitenabdeckung.

Gleiche Bauteile sind in den Figuren mit gleichen Bezugszeichen gekennzeichnet, wobei nicht jedes sich wiederholende Bauteil in jeder Figur separat angegeben ist.

Die nachstehenden Figuren betreffen allesamt ein einziges Ausführungsbeispiel und dienen in ihrer Gesamtheit zur Erläuterung der Erfindung.

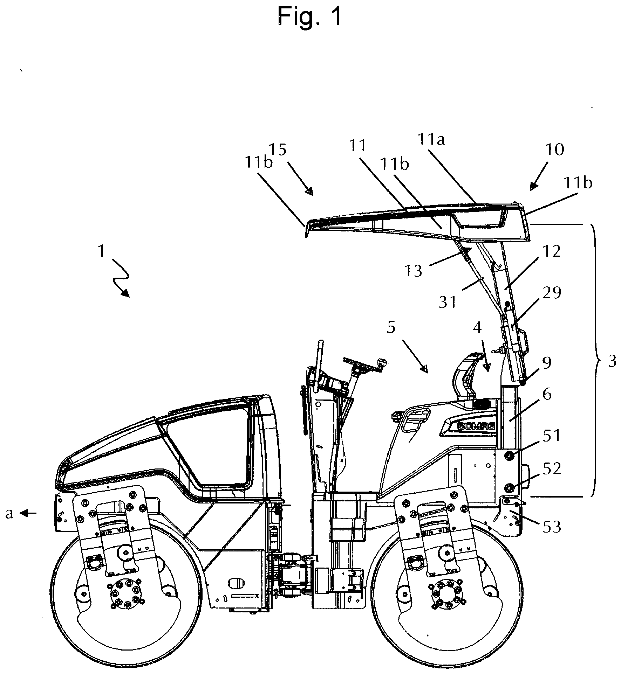

Figur 1 zeigt eine schematische Seitenansicht eines Baufahrzeugs 1, konkret einer Tandemwalze vom Aufsitztyp, mit Wetterschutzeinrichtung 10 in Wetterschutzposition 15. Die Wetterschutzeinrichtung 10 weist eine Dachabdeckung 11 auf, die den im Heckbereich angeordneten Fahrstand 5 des Baufahrzeugs 1 nach oben hin abdeckt. Diese Dachabdeckung 11 ist in der gezeigten Wetterschutzposition 15 nahezu in einem rechten Winkel zu einer Stützvorrichtung 13 angeordnet. Die Stützvorrichtung 13 weist zwei Befestigungsarme 12 auf, die über eine nicht sichtbare zweite Gelenkverbindung mit Dachholmen schwenkbar verbunden sind, die die Dachabdeckung 11 tragen.

Bei der Dachabdeckung 11 handelt es sich um ein wannenartig ausgebildetes Bauteil, welches aus einem wasserdichten und insbesondere auch lichtundurchlässigen Material, beispielsweise einem geeigneten Kunststoff, besteht. An eine im Wesentlichen in einer Ebene, in der Wetterschutzposition in der Horiztonalebene, liegende Grundfläche 11a schließen sich an deren Randbereich nach unten gerichtete Seitenwände 11b (eine Vorderwand, eine Rückwand, eine rechte Seitenwand und eine linke Seitenwand) an. Insgesamt hat die formstabil ausgebildete Dachabdeckung somit eine wannenartige Gesamtform, deren Wanneninnenraum in der Wetterschutzposition nach unten hin geöffnet ist. Innerhalb des durch die Seitenwände 11b und die Grundfläche 11a gebildeten Innenraums sind in der nachstehend noch näher beschriebene Weise Teile der Halterung und Lagerung der Dachabdeckung 11 an dem Überrollbügel untergebracht, so dass diese Elemente nach außen hin geschützt angeordnet sind. Die vollflächige Ausbildung der Dachabdeckung 11 ermöglicht ferner eine gezielte Ableitung von Regenwasser, was beispielsweise durch in die Dachabdeckung integrierte Wasserleiteinrichtungen, beispielsweise in der Art einer Regenrinne, noch verbessert werden kann.

Das Paar Befestigungsarme 12 der Stützvorrichtung 13 ist an Schwenkholmen 7 befestigt, die Teil eines schwenkbaren Überrollbügels sind. Die Schwenkholme 7 sind über eine erste Gelenkverbindung 9 mit einem ortsfesten Seitenholmpaar 6 verbunden. Die Schwenkholme 7 und die Seitenholme 6 bilden zusammen den Überrollbügel. Die Schwenkachsen der ersten Gelenkverbindung und der zweiten Gelenkverbindung verlaufen parallel zueinander, horizontal und quer zur Vorwärtsrichtung a des Baufahrzeugs 1. Das ortsfeste Seitenholmpaar 6 ist in einem rückwärtigen Bereich 4 des Fahrstands 5 des Baufahrzeugs 1 an dessen Maschinenrahmen befestigt und mit zwei Bolzenschrauben 51 und 52 an dem Fahrzeugheck 53 lösbar fixiert. Weitere Details zur Konstruktion der Wetterschutzeinrichtung 10 ergeben sich aus den nachfolgenden Figuren.

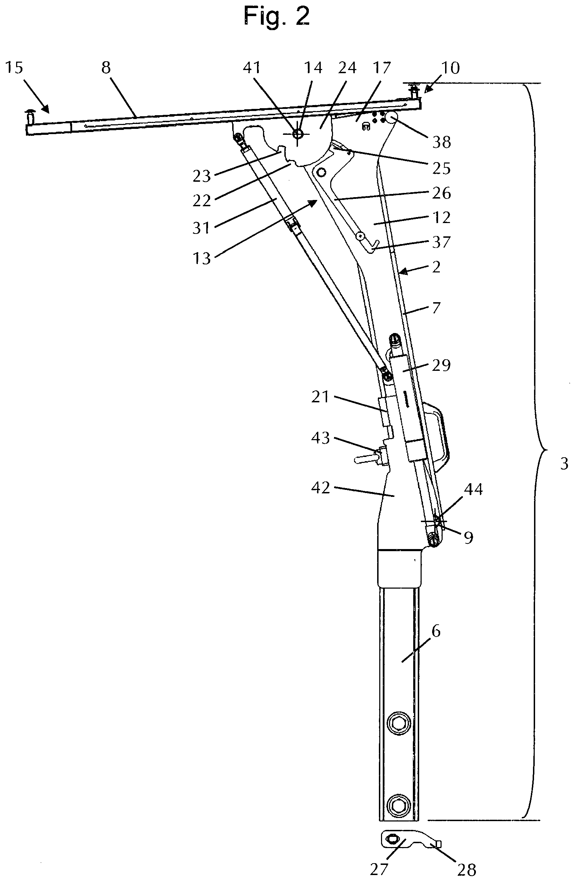

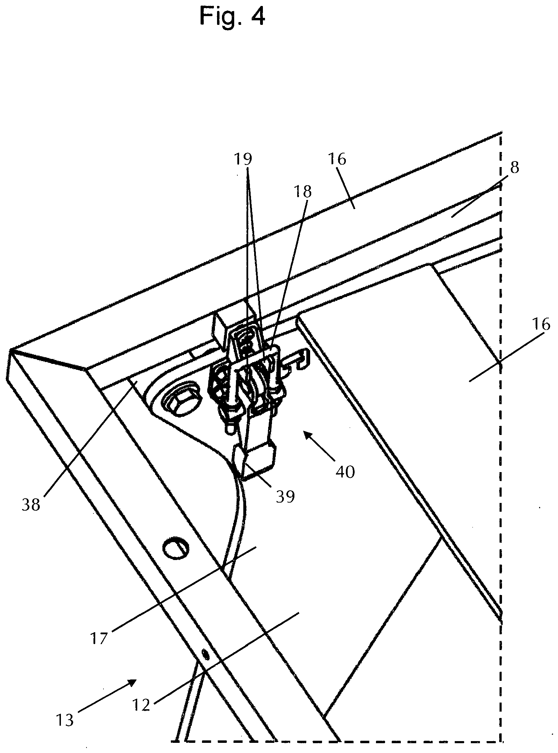

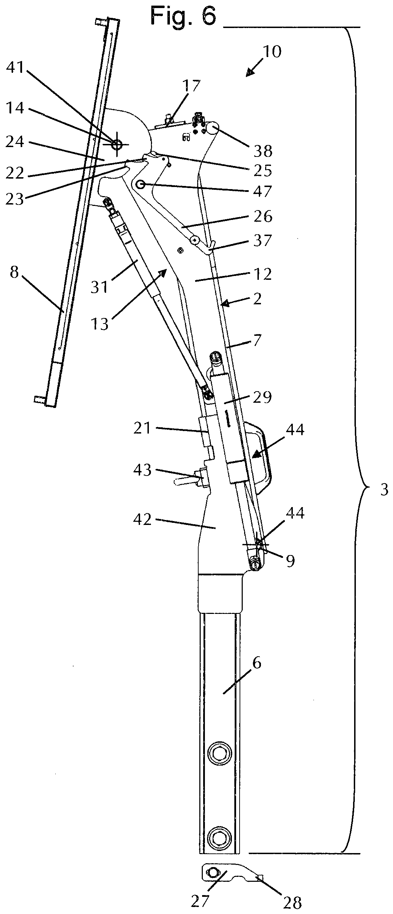

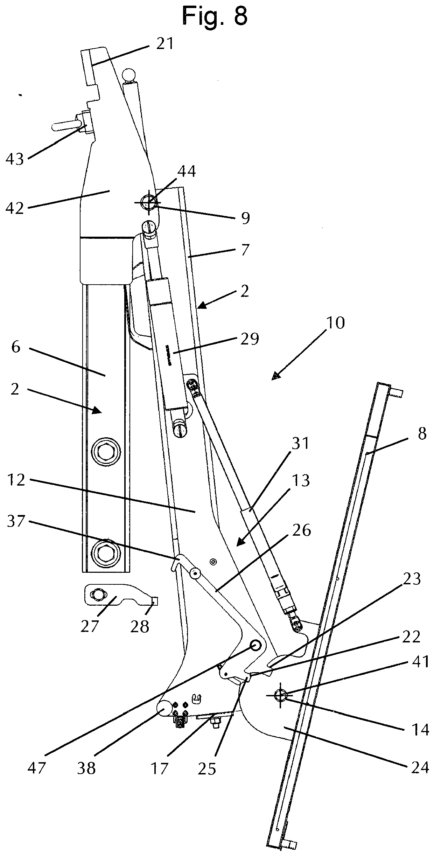

Figur 2 zeigt eine schematische Seitenansicht der Wetterschutzeinrichtung 10 gemäß Figur 1 ohne Dachabdeckung. Die als Kunststoffschale ausgebildete Dachabdeckung 11 ist hier aus Übersichtlichkeitsgründen abgenommen, so dass in Fig. 2 ein im installierten Zustand von der Dachabdeckung 11 abgedecktes Dachholmpaar 8 erkennbar ist, das über die zweite Gelenkverbindung 14 mit den Befestigungsarmen 12 schwenkbar verbunden ist. Die Seitenwände 11b der Dachabdeckung 11 sind dabei soweit von der Grundplatte 11a nach unten gezogen ausgebildet, dass auch die Gelenkverbindung 14 zu den Seiten hin von den Seitenwänden 11b überlappt und damit von diesen geschützt wird. An den Dachholmen 8 ist die Dachabdeckung befestigt. Zur Arretierung der Gelenkverbindung 14 in der Wetterschutzposition 15 ist ein Ende 17 der Befestigungsarme 12 verbreitert und trägt eine in dieser Darstellung nicht sichtbare Arretierungsvorrichtung 40, die in Figur 4 im Detail dargestellt wird. Die Schwenkachse 41 der zweiten Gelenkverbindung 14, umfassend jeweils ein Schwenkgelenk zwischen einem Befestigungsarm 12 und einem Dachholm 8, verläuft rechtwinklig zur Längserstreckung des Befestigungsarms 12 und des Dachholms 8. An dem Dachholm 8 ist eine Rastscheibe 24 angebracht, die zwei Rastpositionen 22 und 23 aufweist, in welche eine Rastnase 25 eines Rasthebels 26 einrastbar ist, wie in den Figuren 6 und 8 angegeben. Während in einer ersten Rastposition 22, wie nachstehend noch weiter angegeben werden wird, das Dachholmpaar 8 in einem spitzen Winkel zu dem Stützarmpaar 12 angeordnet ist, wird bei weiterem Schwenken um die Schwenkachse 41 der Gelenkverbindung 14 das Dachholmpaar 8 nahezu parallel zu dem Stützarmpaar 12 in der zweiten Rastposition 23 mithilfe der Rastnase 25 arretiert.

Figur 2 verdeutlicht ferner, dass in dem Bereich einer ersten Gelenkverbindung 9 zwischen dem ortsfesten Seitenholmpaar 6 und dem Schwenkholmpaar 7 eine Gelenkversteifung 42 angeordnet ist, die U-förmig das Schwenkholmpaar 7 umhüllt und eine Anschlagfläche 21 bereitstellt, an der das Schwenkholmpaar 7 in der in Fig. 2 gezeigten Schutzposition arretierbar ist. Die Arretierung der ersten Gelenkverbindung 9 wird durch ein stufenlos verstellbares Stellglied 43 erreicht, so dass erst nach Öffnen des Stellglieds 43 die Gelenkversteifung 42 das Schwenkholmpaar 7 des Überrollbügels 2 mit dem Stützarmpaar 12 zum Schwenken um eine erste Schwenkachse 44 freigibt.

Diese erste Gelenkverbindung 9 wird von einer ersten Gasdruckfeder 29 überspannt, die zwischen dem ortsfesten Schwenkholmpaar 6 mit der Gelenkversteifung 42 und dem Gelenkholmpaar 7 mit dem Stützarmpaar 12 gelenkig angebracht ist. Diese erste Gasdruckfeder 29 unterstützt und erleichtert das Verstellen des schwenkbaren Überrollbügels 2 mit der Stützvorrichtung 13 der Wetterschutzeinrichtung 10. Eine weitere zweite Gasdruckfeder 31 überspannt die zweite Gelenkverbindung 14 und ist an dem Befestigungsarm 12 und dem Dachholm 8 gelenkig angeordnet und unterstützt die Arretierung des Dachholmpaares 8 in den vorgesehenen Rastpositionen 22 und 23 der Rastscheibe 24.

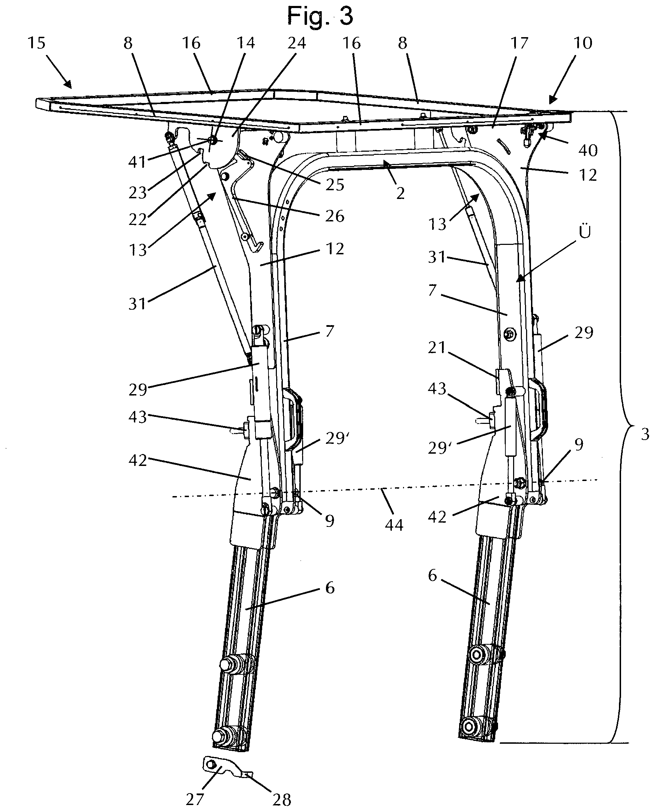

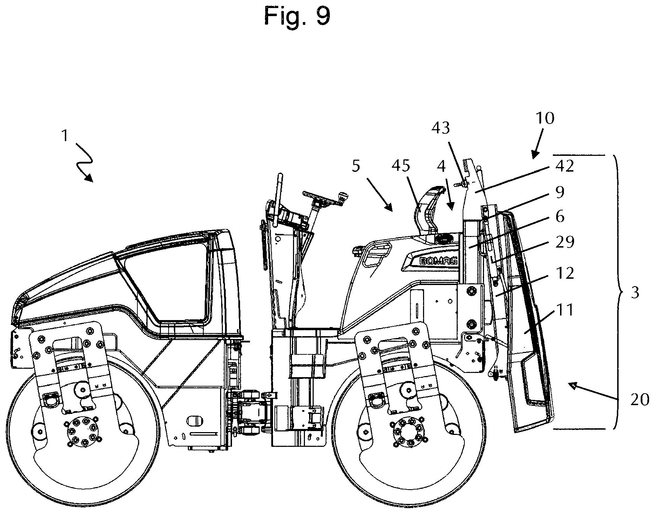

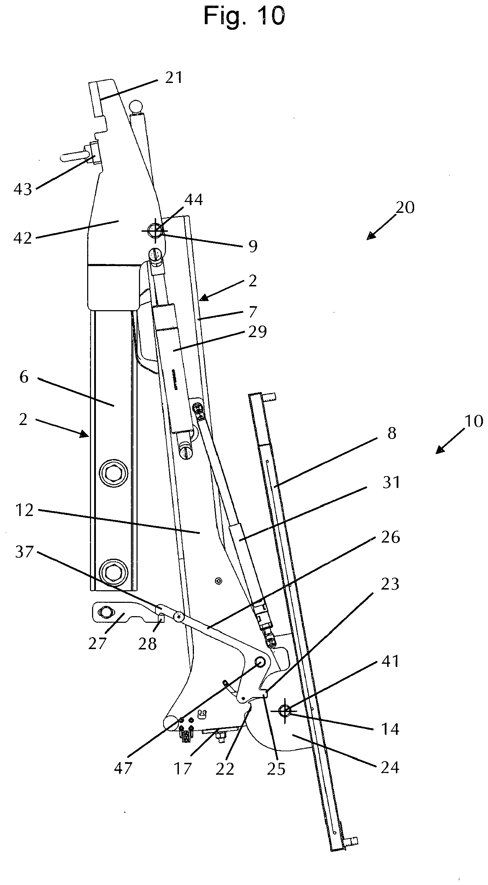

Aus der schematischen perspektivischen Ansicht der Wetterschutzeinrichtung 10 ohne Dachabdeckung (gemäß Figur 2) aus Fig. 3 ergibt sich insbesondere die Gesamtstruktur des schwenkbaren Überrollbügels 2 und der Wetterschutzeinrichtung 10. Das Seitenholmpaar 6 und das Schwenkholmpaar 7 sind über die erste Gelenkverbindung 9 miteinander verbunden. Schwenkachsenübergreifend sind zwischen jedem Seitenholm des Seitenholmpaares 6 und jedem Schwenkholm des Schwenkholmpaares 7 Gasdruckfedern 29 und 29' angeordnet, die beim Schwenken des Schwenkholmpaares 7 um die horizontale Schwenkachse 44 der ersten Gelenkverbindungen 9 das Umschwenken von der hier gezeigten Schutzposition des Überrollbügels 2 mit aufgespannter Wetterschutzeinrichtung 10 in eine in Figur 9 und 10 gezeigte zusammengefaltete Lagerungsposition der Wetterschutzeinrichtung 10 unterstützen.

Auch das Befestigungsarmpaar 12 der Stützeinrichtung 13 weist schwenkachsenübergreifend Gasdruckfedern 31 auf, die in Figur 3 eine zweite Schwenkachse 41 der zweiten Gelenkverbindung 14 überbrücken. Außerdem ist in Figur 3 eine Arretierungsvorrichtung 40 an einem oberen Ende 17 der Befestigungsarme des Stützarmpaares 12 in dieser perspektivischen Darstellung deutlich zu erkennen. Ferner weist eine Dachkonstruktion zur die Aufnahme der Dachabdeckung, wie sie in den vorhergehenden Figuren gezeigt wurde, nicht nur ein Dachholmpaar 8 sondern auch Querholme 16 auf, die praktisch einen Dachrahmen aufspannen, der in dieser Ausführungsform der Erfindung die Dachabdeckung aufnehmen und halten kann.

Figur 4 zeigt eine schematische perspektivische Teilansicht der Stützvorrichtung 13 mit der Arretierungsvorrichtung 40 zur Halterung des Dachholmpaares 8 in der Wetterschutzposition im Detail. Dazu ist in Figur 4 von dem Dachholmpaar 8 ein Dachholm zu sehen, der auf seiner Innenseite zwei Rasthaken 19 aufweist, die an einem oberen Ende 17 eines Stützarms des Stützarmpaares 12 mit einem dort einstellbaren Arretierbügel 18 in Eingriff bringbar sind. Der Arretierbügel 18 ist an diesem oberen Ende 17 eines Stützarms des Stützarmpaares 12 angeordnet und wird mit einem Spannhebel 39 in die hier gezeigte Arretierungsposition geschwenkt.

Zur Freigabe des Dachholmpaares 8 kann der Arretierbügel 18 von der hier gezeigten Arretierungsposition durch Betätigen des schwenkbaren Spannhebel 39 freigeben werden, so dass das Dachholmpaar 8 von der hier gezeigten Wetterschutzposition in unterschiedliche Winkelpositionen zu dem geschwenkt werden kann. Neben der Arretierungsvorrichtung 40 wird mit Figur 4 auch ein Pufferelement 38 gezeigt, auf dem beim Arretieren des Arretierbügels 18 an den Rasthaken 19 das Dachholmpaar 8 angepresst wird.

Darüber hinaus ist in Figur 4 verdeckt von einem Teil des Überrollbügels 2 auch die an dem Dachholm des Dachholmpaares 8 angeordnete Rastscheibe 24 mit ihren Rastpositionen 22 und 23 zu erkennen. Ferner sind zwischen dem Dachholmpaar 8 Querholme 16 gespannt, die den Abstand zwischen den Dachholmen des Dachholmpaares 8 definieren und insgesamt einen Dachrahmen zur Halterung der Dachabdeckung zur Verfügung stellen.

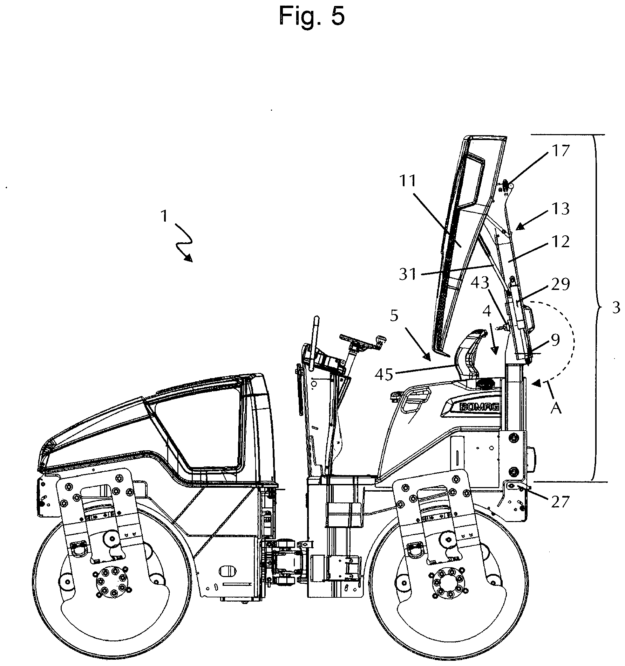

Figur 5 zeigt eine schematische Seitenansicht des Baufahrzeugs 1 der Figur 1 in einer ersten arretierbaren spitzwinkligen Rastposition der Dachabdeckung 11 an der Stützvorrichtung 13. Der Überrollbügel ist in seiner hochgeschwenkten Schutzposition, während die Dachabdeckung um einen spitzen Winkel, der durch die Dachabdeckung verdeckten Schwenkachse der zweiten Schwenkgelenkverbindung geschwenkt ist, in eine Zwischenposition geschwenkt ist, um beispielsweise ein Einquetschen einer Rückenlehne 45 im Fahrstand 5 des Baufahrzeugs 1 beim Zusammenfalten der Wetterschutzeinrichtung mit dem Überrollbügel zu vermeiden. In dieser spitzwinkligen Rastposition kann nun die Dachabdeckung 11 mit dem Stützarm des Stützarmpaares 12 um die erste Gelenkverbindung 9 in eine heckseitige Position des Baufahrzeugs 1 in Pfeilrichtung A geschwenkt werden. Dazu muss vorher das Stellglied 43 aus einer ersten Arretierung 46 der ersten Gelenkverbindung 9 wie es Figur 6 zeigt gelöst werden.

Während in einer ersten Rastposition 22 das Dachholmpaar 8 in einem spitzen Winkel zu dem Stützarmpaar 12 angeordnet ist, wird bei weiterem Schwenken um die Schwenkachse 41 der Gelenkverbindung 14 das Dachholmpaar 8 nahezu parallel zu dem Stützarmpaar 12 in der zweiten Rastposition 23 mithilfe der Rastnase 25 arretiert.

Figur 6 zeigt eine schematische Seitenansicht der Wetterschutzeinrichtung 10 am Überrollbügel mit arretierter Rastposition 22 gemäß Figur 5 ohne Dachabdeckung. An jedem Dachholm 8 des Dachholmpaares eine Rastscheibe 24 angebracht, welche die zweite Gelenkverbindung 14 führt und den Befestigungsarm 12 der Stützvorrichtung 13 schwenkbar um die Schwenkachse 41 verbindet. Bei dem Verschwenken des Dachholmpaares 8 in die hier gezeigte spitzwinklige Position zu dem Stützarmpaar 12 bzw. dem Schwenkholmpaar 7 steht die Rastnase 25 des Rasthebels 26 mit der ersten Rastposition 22 der Rastscheibe 24 in arretierendem Eingriff. Der Rasthebel 26 ist um seine Schwenkachse 47 schwenkbar. Auf der gegenüberliegenden Seite zu der Rastnase 25 weist der Rasthebel 26 außerdem eine Sicherungsnase 37 auf, deren Bedeutung für das Sichern der Wetterschutzeinrichtung in ihrer Lagerungsposition mit Figur 10 im Detail erläutert wird.

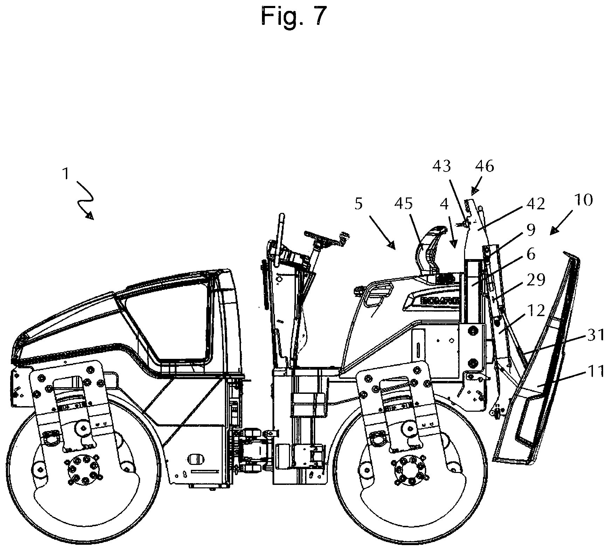

Figur 7 betrifft eine schematische Seitenansicht des Baufahrzeugs 1 der Figur 1 mit umgeklappter Wetterschutzeinrichtung 10 bei spitzwinklig arretierter Rastposition der Dachabdeckung 11 gemäß Figur 5. Diese Verstellung der Dachabdeckung 11 in eine heckseitige Position unterhalb des Fahrstands 5 wird dadurch erreicht, dass durch das Stellglied 43 die erste Arretierung 46 der ersten Gelenkverbindung 9 für ein Umklappen des Schwenkholmpaares, welches das Stützarmpaar 12 trägt, freigegeben wird. Während dieses Schwenkvorgangs wird spitzwinklige Arretierung der Dachabdeckung 11 zunächst beibehalten, wie es auch die nachfolgende Figur 8 im Detail zeigt.

Figur 8 zeigt eine schematische Seitenansicht der umgeklappten Wetterschutzeinrichtung gemäß Figur 7 ohne Dachabdeckung. Wie ohne weiteres erkennbar ist, verbleibt das ortsfeste Seitenholmpaar 6 des Überrollbügels 2 in seiner unveränderten Position und lediglich das Schwenkholmpaar 7 ist um die zugehörige erste Schwenkachse 44 der ersten Gelenkverbindung 9 nun in seiner zur Heckseite hin geschwenkten Position angeordnet. Die zweite Gelenkverbindung 14 mit der zweiten Schwenkachse 41 ist nun weit unterhalb des Seitenholmpaares 6 positioniert.

Der Rasthebel 26 befindet sich noch mit seiner Rastnase 25 in Eingriff mit der Rastposition 22 der Rastscheibe 24 und kann nun, um das Dachholmpaar 8 in eine nahezu parallele Position zu dem Schwenkholmpaar 7 mit Stützarmpaar 12 zu bringen, aus dieser Rastposition 22 in die hier gezeigte Rastposition 23 der Rastscheibe 24 verbracht werden. Dabei ist nun sowohl die Position der Schwenkachse 47 des Rasthebels 26 als auch die oben bereits erwähnte Sicherungsnase 37 an dem Rasthebel 26 entscheidend. Die Sicherungsnase 37 kann nun, wenn die Rastposition 23 eingenommen wird, um die Schwenkachse 47 des Rasthebels 26 in die in Figur 8 gezeigte Arretierungsposition durch Eingreifen in einen Sicherungsvorsprung 28 eines an der Fahrzeugheckseite fixierten Sicherungshakens 27 eine Lagerungsposition der zusammengeklappten Wetterschutzeinrichtung 13 sichern.

Sobald die Rastnase 25 aus der Rastposition 22 durch Schwenken des Rasthebels 26 um die Schwenkachse 47 abgezogen ist und in die Rastposition 23 eingeführt wird, schwenkt sich auf der gegenüberliegenden Seite die Sicherungsnase 37 in die Sicherungsnut 28 des Sicherungshakens 27 und arretiert damit das Dachholmpaar 8 in der Lagerungsposition der Wetterschutzvorrichtung 13, wie es die nachfolgenden Figuren 9 und 10 zeigen.

Figur 9 zeigt eine schematische Seitenansicht des Baufahrzeugs 1 gemäß Figur 1 mit der Wetterschutzeinrichtung 10 in ihrer zusammengefalteten oder zusammengeklappten Lagerungsposition 20. Einzelheiten dieser endgültigen Lagerungsposition 20 werden in der nachfolgenden Figur 10 im Detail gezeigt, während hier in Figur 9 die Kompaktheit der Wetterschutzeinrichtung 10 in ihrer Lagerungsposition 20 an der Heckseite des Baufahrzeugs deutlich demonstriert wird.

Figur 10 betrifft nun eine schematische Seitenansicht der Wetterschutzeinrichtung 10 gemäß Figur 9 in der Lagerungsposition 20 ohne Dachabdeckung 11, so dass wiederum die Kinematik der drei Holmpaare, nämlich Seitenholmpaar 6, Schwenkholmpaar 7, Dachholmpaar 8, und der im Stützarmpaar 12 angeordneten Schwenk- und Arretierungskomponenten deutlich wird. In dieser Lagerungsposition 20 ist nun das Dachholmpaar 8 nahezu parallel zu dem Schwenkholmpaar 7 des Überrollbügels 2 ausgerichtet und mithilfe des Rasthebels 26 in der Rastposition 23 der Rastscheibe 24 arretiert, wobei gleichzeitig die der Rastnase 25 des Rasthebels 26 gegenüberliegende Sicherungsnase 37 mit dem Sicherungshaken 27 an dem Baufahrzeug in Eingriff steht. Gleichzeitig unterstützt die Gasdruckfeder 31 durch Zugkräfte, dass das Dachholmpaar 8 in dieser Rastposition 23 verbleibt.

Die Zusammenschau, insbesondere der Figuren 1, 5, 7 und 8 beziehungsweise 2, 6, 8 und 10 verdeutlicht in dieser Reihenfolge somit einen insgesamt dreistufigen Zusammenfaltvorgang ausgehend von einer Arbeitsposition, in der die Wetterschutzeinrichtung in Wetterschutzposition und der Überrollbügel Ü in aufgestellter Schutzposition ist, in einer zusammengefaltete Verstauposition, in der die Wetterschutzeinrichtung in eingeschwenkter Lagerungsposition und der Überrollbügel Ü in herabgeschwenkter Transportposition ist, und in umgekehrter Reihenfolge entsprechend einen Auffaltvorgang. Besonders hervorzuheben ist dabei, dass die Schwenkbewegungen des Überrollbügels und der Wetterschutzeinrichtung in der Weise angelegt sind, dass die Dachabdeckung im Heckbereich hinter dem Fahrstand verstaut wird, konkret vertikal aufgestellt an die Rückwand angeschwenkt wird, und auf diese Weise einerseits besonders wenig Platz erfordert und gleichzeitig der Fahrstand des Baufahrzeugs 1 nicht blockiert ist, so dass eine Bewegung und Steuerung der Baumaschine 1 auch in diesem Zustand möglich ist. Durch das Zusammenfalten wird die Höhe 3 (Vertikalerstreckung vom unteren Ende der Gesamtheit aus Überrollbügel Ü und Wetterschutzeinrichtung 10) für den Transportbetrieb erheblich reduziert beziehungsweise zumindest zum Boden hin verlagert, wie insbesondere ein Vergleich der Figuren und 9 verdeutlicht.

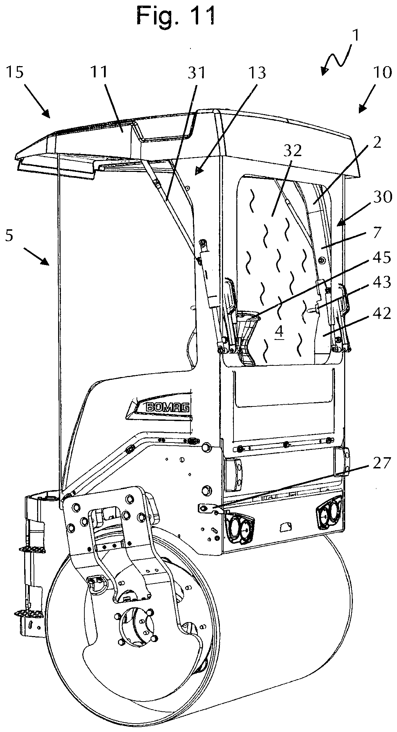

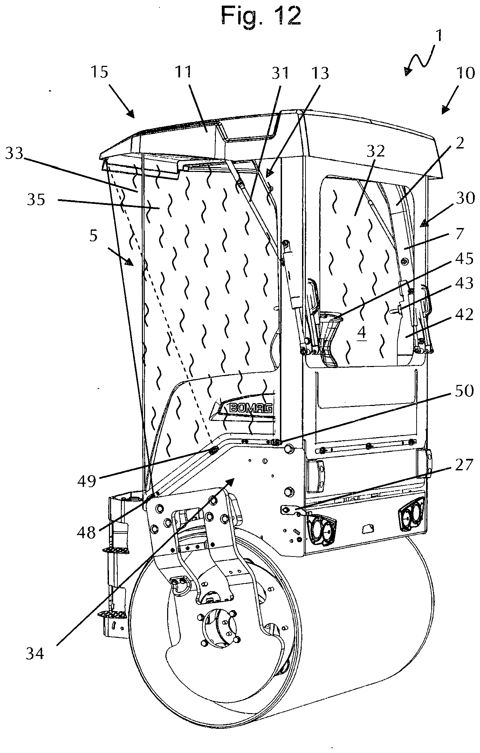

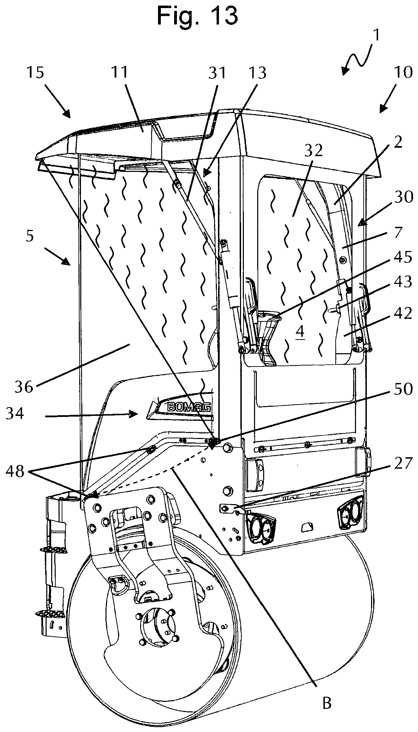

Figur 11 zeigt eine schematische perspektivische Ansicht eines Führungsbereichs 5 eines Baufahrzeugs 1 gemäß Figur 1 mit aufgespannter Wetterschutzeinrichtung 10 in einer Wetterschutzposition 15 mit einer heckseitig angebrachten Abdeckung 30. Diese Heckabdeckung 30 kann an einer Kunststoffschale der Dachabdeckung 11, insbesondere an der Innenseite der jeweiligen Seitenwände 11b, angeklemmt werden oder in eine Kederschiene, welche am Querholm 16 befestigt ist, eingezogen werden, wenn ein verbesserter Wetterschutz erforderlich wird. Die Heckabdeckung 30 weist dazu einen großen transparenten Sichtbereich 32 auf, so dass die rückwärtige Sicht für den Fahrer im Fahrstand 5 gewährleistet ist. Außerdem können mit der Heckabdeckung 30 die heckseitigen Kanten bzw. Ränder mit der Gelenkmechanik für das Verschwenken der Wetterschutzeinrichtung ebenfalls abgedeckt werden. Die Heckseitenabdeckung kann weiter ergänzt werden, wie es in den nachfolgenden Figuren 12 und 13 im Detail dargestellt ist.

Figur 12 zeigt eine schematische perspektivische Ansicht eines Fahrstands 5 des Baufahrzeugs 1 mit zusätzlich seitlich angebrachter Seitenabdeckungen 33. Diese Seitenabdeckung 33 kann im Wesentlichen aus transparentem Material für einen Sichtbereich 35 hergestellt sein, so dass trotz Wetterschutz der Fahrer von dem Fahrstand aus zu beiden Seiten des Baufahrzeugs eine relativ freie Sicht hat.

Um diese freie Sicht in Teilbereichen zu verbessern, zeigt Figur 13 eine schematische perspektivische Ansicht des Fahrstands 5 des Baufahrzeugs 1 gemäß Figur 12 nach einem teilweisen Umschlagen die Seitenabdeckung 34. Dazu wird die Seitenabdeckung 34 von Fixierpunkten 48 gelöst, eingerollt und an einem hinteren Fixierpunkt 50, konkret einem Haken, vorübergehend befestigt beziehungsweise eingehangen. Dies hat den Vorteil, dass nun der Fahrer von dem Fahrstand 5 aus einen freien Blick seitlich nach unten hat, um die Bearbeitung durch das Baufahrzeugs 1 in einem Bereich der Bodenoberfläche zu überprüfen.

Obwohl eine beispielhafte Ausführungsform in der vorhergehenden Beschreibung gezeigt wurde, können verschiedene Änderungen und Modifikationen vorgenommen werden. Die genannte Ausführungsform ist lediglich ein Ausführungsbeispiel und nicht dazu vorgesehen, den Gültigkeitsbereich, die Anwendbarkeit oder die Konstruktion in irgendeiner Weise zu beschränken. Vielmehr stellt die vorhergehende Beschreibung dem Fachmann einen Plan zu Umsetzung des beispielhaften Ausführungsbeispiels zur Verfügung, wobei zahlreiche Änderungen in der Funktion der beispielhaft beschriebenen Ausführungsform gemacht werden können ohne den Schutzbereich der angefügten Ansprüche und ihrer rechtlichen Äquivalente zu verlassen.

## Patentansprüche

1. Kabinenloses Baufahrzeug (1), mit einem Überrollbügel (2), umfassend ein Vertikalträgerpaar (3), das in einem rückwärtigen Bereich (4) eines Fahrstandes (5) des Baufahrzeugs angeordnet ist, wobei jeder Vertikalträger (3) jeweils einen ortsfest am Baufahrzeug angeordneten Seitenholm (6) und einen Schwenkholm (7) aufweist, die über erste Gelenkverbindungen (9) miteinander verbunden sind und zwischen einer Schutzposition und einer Transportposition des Überrollbügels (2) zueinander verstellbar sind,
wobei eine Wetterschutzeinrichtung (10) mit Dachabdeckung (11) für den Fahrstand (5) am Überrollbügel (2) angeordnet ist, wobei die Dachabdeckung (11) der Wetterschutzeinrichtung (10) am Überrollbügel (2) in der Weise bewegbar gelagert ist, dass sie zwischen einer aufgespannten Wetterschutzposition (15) bei in Schutzposition befindlichem Überrollbügel (2) und einer Lagerungsposition (20) bei in Transportposition befindlichem Überrollbügel (2) zusammen mit dem Überrollbügel (2) verstellbar ist, **dadurch gekennzeichnet, dass** die Dachabdeckung (11) durch Freigeben einer ersten Arretierung (46) eines Stellgliedes (43) der ersten Gelenkverbindungen (9) in eine heckseitige Position unterhalb des Fahrstandes verstellbar ist, und wobei die Dachabdeckung (11) in ihrer Lagerungsposition (20) in einer Winkelstellung nahezu parallel zu dem Schwenkholmpaar (7) arretierbar ist.

2. Baufahrzeug nach Anspruch 1,
dadurch gekennze ichnet,
dass die Wetterschutzeinrichtung Befestigungsarme (12) und Dachholme (8) aufweist, wobei sie über die Befestigungsarme (12) an den Schwenkholmen (7) gelagert ist, und wobei die Dachholme (8) über eine zweite Gelenkverbindung (14) an den Schwenkholmen (7) bewegbar gelagert sind, und dass die Dachholme (8) die Dachabdeckung (11) tragen, wobei insbesondere zwischen den Dachholmen (8) wenigstens ein Querholm (16) angeordnet ist.

3. Baufahrzeug nach Anspruch 2,
dadurch gekennzeich net,
dass eine Arretiervorrichtung vorhanden ist, die zur Feststellung der in aufgespannter Wetterschutzposition befindlichen Dachabdeckung (11) an den Befestigungsarmen (12) ausgebildet ist.

4. Baufahrzeug nach Anspruch 3,
**dadurch gekennzeichnet,**
**dass** die oberen Enden (17) der Befestigungsarme (12) Arretierbügel (18) aufweisen, die in der aufgespannten Wetterschutzposition (15) der Dachabdeckung (11) mit Rasthaken (19) der Dachholme (8) in Eingriff stehen und die zweiten Gelenkverbindungen (14) in der Wetterschutzposition (15) arretieren.

5. Baufahrzeug nach einem der Ansprüche 2 bis 4,
**dadurch gekennzeichnet,**
**dass** die Gelenkverbindungen (9, 14) Schwenkgelenke aufweisen, wobei die Schwenkgelenkachsen rechtwinklig zu den jeweiligen Längsachsen der Holmen der Seitenholmpaare (6), der Schwenkholmpaare (7) und der Dachholmpaare (8) ausgerichtet sind.

6. Baufahrzeug nach einem der Ansprüche 2 bis 5,
**dadurch gekennzeichnet,**
**dass** die erste Gelenkverbindung (9) zwischen dem Seitenholmpaar (6) und dem Schwenkholmpaar (7) Anschlagflächen (21) aufweisen, an welchen das Schwenkholmpaar (7) den Überrollbügel (2) in seiner Schutzposition arretiert, und dass die Dachabdeckung (11) in der Schutzposition des Überrollbügels (2) mittels der zweiten Gelenkverbindungen (14) in mehreren vorgegebenen Winkelstellungen zu dem Schwenkholmpaar (7) arretierbar ist.

7. Baufahrzeug nach einem Ansprüche 2 bis 6,
**dadurch gekennzeichnet,**
**dass** die Schwenkgelenke der zweiten Gelenkverbindungen (14) mit Rastpositionen (22, 23) von Rastscheiben (24) zusammenwirken, wobei die Rastscheiben (24) an den Dachholmen des Dachholmpaares (8) fixiert sind, und wobei in die Rastpositionen (22, 23) der Rastscheiben (24) eine Rastnase (25) eines schwenkbaren Rasthebels (26) eingreifen kann, der an den Stützarmpaar (12) der Stützvorrichtung (13) der Dachabdeckung (11) drehbar fixiert ist, wobei in jeder der Rastpositionen (22, 23) die Dachabdeckung (11) mit dem Dachholmpaar (8) gegenüber dem Stützarmpaar (12) und somit gegenüber dem Schwenkholmpaar (7) in vorbestimmten Winkelstellungen arretierbar ist.

8. Baufahrzeug nach Anspruch 8,
**dadurch gekennzeichnet,**
**dass** in dem rückwärtigen Bereich (4) unterhalb des Fahrstands (5) des Baufahrzeugs ein Sicherungshaken (27) angeordnet ist, der mit einer Sicherungsnase (37) des Rasthebels (26) in der Lagerungsposition (20) der Dachabdeckung (11) in Eingriff bringbar ist.

9. Baufahrzeug nach einem der Ansprüche 2 bis 8,
**dadurch gekennzeichnet,**
**dass** zwischen dem Befestigungsarm (12) und dem Dachholm (8) wenigstens eine zweite Gasdruckfeder (31) angeordnet ist, welche im Bereich der zweiten Gelenkverbindungen (14) schwenkgelenkübergreifend angeordnet sind.

10. Baufahrzeug nach einem der vorhergehenden Ansprüche,
**dadurch gekennzeichnet,**
**dass** die Dachabdeckung (11) wenigstens eines der folgenden Merkmale aufweist:
- sie ist in ihrer Wetterschutzposition (15), insbesondere mit ihrem Dachholmpaar (8), in einer ersten Winkelstellung nahezu rechtwinklig zu dem Schwenkholmpaar (7) arretierbar;
- sie ist, insbesondere mit ihrem Dachholmpaar (8), in einer zweiten Winkelstellung spitzwinklig zu dem Schwenkholmpaar

11. Baufahrzeug nach einem der vorhergehenden Ansprüche,
**dadurch gekennzeichnet,**
**dass** zwischen dem Seitenholm (6) und dem Schwenkholm (7) wenigstens eine erste Gasdruckfedern (29) angeordnet ist, welche im Bereich der ersten Gelenkverbindungen (9) schwenkgelenkübergreifend angeordnet ist.

12. Baufahrzeug nach einem der vorhergehenden Ansprüche,
**dadurch gekennzeichnet,**
**dass** eine Heckabdeckung (30) vorhanden ist, die mit der Dachabdeckung (11) lösbar verbunden ist, wobei die Heckabdeckung (30) einen Sichtbereich (32) aus transparentem Material umfasst.

13. Baufahrzeug nach einem der vorhergehenden Ansprüche,
**dadurch gekennzeichnet,**
**dass** Seitenabdeckungen (33) vorhanden sind, die mit der Dachabdeckung (11) lösbar verbunden sind, wobei die Seitenabdeckungen (33) unterhalb des Fahrstands (5) an Seitenteilen (34) des Baufahrzeugs lösbar fixiert sind und wobei in den Seitenabdeckungen (33) Sichtbereiche (35) aus transparentem Material angeordnet sind.

14. Baufahrzeug nach Anspruch 13,
**dadurch gekennzeichnet,**
**dass** die Seitenabdeckungen (33) unterhalb des Fahrstands (5) an Seitenteilen (34) des Baufahrzeugs teilweise einrollbar sind und in dem eingerollten Zustand (36) lösbar fixiert sind.

15. Baufahrzeug nach einem der vorhergehenden Ansprüche,
**dadurch gekennzeichnet,**
**dass** das kabinenlose Fahrzeug eine Tandemwalze ist.

## Claims

1. A cabinless construction vehicle (1), with a roll bar (2), comprising a pair of vertical supports (3) arranged in a rear region (4) of an operator platform (5) of the construction vehicle, each vertical support (3) having in each case a side beam (6) fixedly arranged on the construction vehicle and a pivoting beam (7), which are connected to one another via first articulated connections (9) and are adjustable relative to one another between a protection position and a transport position of the roll bar (2), a weather protection device (10) with a roof cover (11) for the operator platform (5) being arranged on the roll bar (2), the roof cover (11) of the weather protection device (10) being movably mounted on the roll bar (2) in such a manner that it is adjustable together with the roll bar (2) between a deployed weather protection position (15) when the roll bar (2) is in the protection position and a storage position (20) when the roll bar (2) is in the transport position,
**characterized in that**
the roof cover (11) is adjustable into a rear-side position below the operator platform by releasing a first arrest (46) of an actuator (43) of the first articulated connections (9), and wherein the roof cover (11) is arrestable in its storage position (20) in an angular position almost parallel to the pair of pivoting beams (7).

2. The construction vehicle according to claim 1,
**characterized in that**
the weather protection device has fastening arms (12) and roof beams (8), the weather protection device being mounted on the pivoting beams (7) via the fastening arms (12), and the roof beams (8) being movably mounted on the pivoting beams (7) via a second articulated connection (14), and **in that** the roof beams (8) support the roof cover (11), in particular wherein at least one transverse beam (16) is arranged between the roof beams (8).

3. The construction vehicle according to claim 2,
**characterized in that**
an arresting apparatus is provided which is configured to lock the roof cover (11) at the fastening arms (12) in the deployed weather protection position.

4. The construction vehicle according to claim 3,
**characterized in that**
the top ends (17) of the fastening arms (12) have arresting brackets (18) which engage latching hooks (19) of the roof beams (8) in the deployed weather protection position (15) of the roof cover (11) and arrest the second articulated connections (14) in the weather protection position (15).

5. The construction vehicle according to any one of claims 2 to 4,
**characterized in that** the articulated connections (9, 14) have pivot joints, pivot joint axes being oriented at right angles to the respective longitudinal axes of the beams of the pairs of side beams (6), pivoting beams (7) and roof beams (8).

6. The construction vehicle according to any one of claims 2 to 5,
**characterized in that**
the first articulated connections (9) between the pair of side beams (6) and the pair of pivoting beams (7) have stop surfaces (21) on which the pair of pivoting beams (7) arrests the roll bar (2) in its protection position, and **in that** in the protection position of the roll bar (2) the roof cover (11) is arrestable in multiple specified angular positions relative to the pair of pivoting beams (7) by means of the second articulated connections (14).

7. The construction vehicle according to any one of claims 2 to 6,
**characterized in that**
the pivot joints of the second articulated connections (14) cooperate with latching positions (22, 23) of latching discs (24), the latching discs (24) being fixed to the roof beams of the pair of roof beams (8), and a latching nose (25) of a pivotable latching lever (26) rotatably fixed to the pair of support arms (12) of the support apparatus (13) of the roof cover (11) being able to engage the latching positions (22, 23) of the latching discs (24), wherein in each of the latching positions (22, 23) the roof cover (11) with the pair of roof beams (8) is arrestable in predetermined angular positions relative to the pair of support arms (12) and thus relative to the pair of pivoting beams (7).

8. The construction vehicle according to claim 8,
**characterized in that**
a securing hook (27) is arranged in the rear region (4) below the operator platform (5) of the construction vehicle, which securing hook can be brought into engagement with a securing nose (37) of the latching lever (26) in the storage position (20) of the roof cover (11).

9. The construction vehicle according to any one of claims 2 to 8,
**characterized in that**
at least one second gas pressure spring (31) is arranged between the fastening arm (12) and the roof beam (8), which are arranged in the region of the second articulated connections (14) so as to span the pivot joints.

10. The construction vehicle according to any one of the preceding claims,
**characterized in that**
the roof cover (11) has at least one of the following features:
- it is arrestable in its weather protection position (15), in particular with its pair of roof beams (8), in a first angular position almost at right angles to the pair of pivoting beams (7),
- it is arrestable, in particular with its pair of roof beams (8), in a second angular position at an acute angle to the pair of pivoting beams.

11. The construction vehicle according to any one of the preceding claims,
**characterized in that**
at least one first gas pressure spring (29) is arranged between the side beam (6) and the pivoting beam (7), which is arranged in the region of the first articulated connections (9) so as to span the pivot joints.

12. The construction vehicle according to any one of the preceding claims,
**characterized in that**
a rear cover (30) is provided which is releasably connected to the roof cover (11), the rear cover (30) comprising a viewing area (32) made of transparent material.

13. The construction vehicle according to any one of the preceding claims,
**characterized in that**
side covers (33) are provided which are releasably connected to the roof cover (11), the side covers (33) being releasably fixed to side parts (34) of the construction vehicle below the operator platform (5), and viewing areas (35) made of transparent material being arranged in the side covers (33).

14. The construction vehicle according to claim 13,
**characterized in that**
the side covers (33) can be partially rolled in at side parts (34) of the construction vehicle below the operator platform (5) and are releasably fixed in the rolled-in state (36).

15. The construction vehicle according to any one of the preceding claims,
**characterized in that**
the cabinless vehicle is a tandem roller.

## Revendications

1. Véhicule de chantier (1) sans cabine, avec un arceau de sécurité (2) comprenant une paire de supports verticaux (3) disposés dans une zone arrière (4) d'une plateforme (5) pour l'opérateur du véhicule de chantier, chaque support vertical (3) ayant chacun un longeron latéral (6) agencé de manière fixe sur le véhicule de chantier et un longeron pivotant (7) qui sont reliés l'un à l'autre au moyen de premières articulations (9) et qui sont réglables l'un par rapport à l'autre entre une position de protection et une position de transport de l'arceau de sécurité (2), un dispositif (10) de protection contre les intempéries avec un pavillon de toit (11) pour la plateforme opérateur (5) étant installé sur l'arceau de sécurité (2), le pavillon de toit (11) du dispositif (10) de protection contre les intempéries étant monté de manière mobile sur l'arceau de sécurité (2) d'une manière telle qu'il soit réglable de manière conjointe avec l'arceau de sécurité (2) entre une position déployée (15) de protection contre les intempéries lorsque l'arceau de sécurité (2) est dans sa position de protection, et une position de stockage (20) lorsque l'arceau de sécurité (2) est dans la position de transport,
***caractérisé en ce que***
le pavillon de toit (11) est réglable dans une position arrière sous la plateforme opérateur par libération d'un premier dispositif de verrouillage (46) d'un actionneur (43) des premières articulations (9), et dans lequel le pavillon de toit (11) peut être arrêté dans sa position de stockage (20) dans une position angulaire presque parallèle à la paire de longerons pivotants (7).

2. Véhicule de chantier selon la revendication 1,
***caractérisé en ce que***
le dispositif de protection contre les intempéries possède des bras de fixation (12) et des longerons (8) de toit, le dispositif de protection contre les intempéries étant monté sur les longerons pivotants (7) au moyen des bras de fixation (12), et les longerons (8) de toit étant montés mobiles sur les longerons pivotants (7) au moyen d'une seconde articulation (14), et ***en ce que*** les longerons (8) de toit supportent le pavillon de toit (11), dans lequel en particulier au moins un longeron transversal (16) est placé entre les longerons (8) de toit.

3. Véhicule de chantier selon la revendication 2,
***caractérisé en ce que***
un dispositif d'arrêt est prévu qui est configuré pour verrouiller le pavillon de toit (11) sur les bras de fixation (12) dans la position déployée de protection contre les intempéries.

4. Véhicule de chantier selon la revendication 3,
***caractérisé en ce que***
les extrémités supérieures (17) des bras de fixation (12) ont des étriers d'arrêt (18) qui s'engagent avec des crochets de verrouillage (19) des longerons (8) de toit dans la position déployée (15) de protection contre les intempéries du pavillon de toit (11) et arrêtent les secondes articulations (14) dans la position (15) de protection contre les intempéries.

5. Véhicule de chantier selon l'une quelconque des revendications 2 à 4,
***caractérisé en ce que***
les articulations (9, 14) ont des joints pivotants, les axes des joints pivotants étant orientés à angles droits par rapport aux axes longitudinaux respectifs des longerons des paires de longerons latéraux (6), des longerons pivotants (7) et des longerons (8) de toit.

6. Véhicule de chantier selon l'une quelconque des revendications 2 à 5,
***caractérisé en ce que***
les premières articulations (9) entre la paire de longerons latéraux (6) et la paire de longerons pivotants (7) présentent des surfaces de butée (21) sur lesquelles la paire de longerons pivotants (7) arrête l'arceau de sécurité (2) dans sa position de protection, et ***en ce que,*** dans la position de protection de l'arceau de sécurité (2), le pavillon de toit (11) peut être arrêté dans de multiples positions angulaires spécifiques par rapport à la paire de longerons pivotant (7) au moyen des secondes articulations (14).

7. Véhicule de chantier selon l'une quelconque des revendications 2 à 6,
***caractérisé en ce que***
les joints pivotants des secondes articulations (14) coopèrent avec des positions d'encliquetage (22, 23) de disques d'encliquetage (24), les disques d'encliquetage (24) étant fixés aux longerons (8) de toit de la paire de longerons de toit (8), et un ergot d'encliquetage (25) d'un levier d'encliquetage (26) pouvant pivoter, fixé de manière pouvant pivoter à la paire de bras de support (12) du dispositif de support (13) du pavillon de toit (11), étant apte à engager les positions d'encliquetage (22, 23) des disques d'encliquetage (24), dans lequel dans chacune des positions d'encliquetage (22, 23), le pavillon de toit (11) avec la paire de longerons (8) de toit peut être arrêté dans des positions angulaires prédéterminées par rapport à la paire de bras de support (12) et ainsi par rapport à la paire de longerons pivotants (7).

8. Véhicule de chantier selon la revendication 7,
***caractérisé en ce que***
un crochet de sécurité (27) est disposé dans la zone arrière (4) située sous la plateforme opérateur (5) du véhicule de chantier, ledit crochet de sécurité pouvant être amené en engagement avec un ergot de sécurité (37) du levier d'encliquetage (26) dans la position de stockage (20) du pavillon de toit (11).

9. Véhicule de chantier selon l'une quelconque des revendications 2 à 8,
***caractérisé en ce que***
au moins un second ressort pneumatique (31) est disposé entre le bras de fixation (12) et le pavillon de toit (8), qui est disposé dans la zone des secondes articulations (14) afin d'étendre les joints pivotants.

10. Véhicule de chantier selon l'une quelconque des revendications précédentes,
***caractérisé en ce que***
le pavillon de toit (11) présente au moins l'une des caractéristiques suivantes :
- il peut être bloqué dans sa position (15) de protection contre les intempéries, en particulier avec sa paire de longerons (8) de toit, dans une première position angulaire presque à angles droits par rapport à la paire de longerons pivotants (7),
- il peut être bloqué, en particulier avec sa paire de longerons (8) de toit, dans une seconde position angulaire avec un angle aigu par rapport à la paire de longerons pivotants.

11. Véhicule de chantier selon l'une quelconque des revendications précédentes,
***caractérisé en ce que***
au moins un premier ressort pneumatique (29) est disposé entre le longeron latéral (6) et le longeron pivotant (7), qui est disposé dans la zone des premières articulations (9) afin d'étendre les joints pivotants.

12. Véhicule de chantier selon l'une quelconque des revendications précédentes,
***caractérisé en ce que***
une couverture arrière (30) est présente, qui est reliée de manière amovible au pavillon de toit (11), la couverture arrière (30) comprenant une zone de vision (32) réalisée dans un matériau transparent.

13. Véhicule de chantier selon l'une quelconque des revendications précédentes,
***caractérisé en ce que***
des couvertures latérales (33) sont présentes, qui sont reliées de manière amovible au pavillon de toit (11), les couvertures latérales (33) étant fixées de manière amovible aux parties latérales (34) du véhicule de chantier sous la plateforme opérateur (5), et des zones de vision (35) réalisées dans un matériau transparent étant placées dans les couvertures latérales (33).

14. Véhicule de chantier selon la revendication 13,
***caractérisé en ce que***
les couvertures latérales (33) peuvent être partiellement repliées au niveau des parties latérales (34) du véhicule de chantier sous la plateforme opérateur (5) et sont fixées de manière libérable dans leur état replié (36).

15. Véhicule de chantier selon l'une quelconque des revendications précédentes,
***caractérisé en ce que***
le véhicule sans cabine est un rouleau tandem.
